# EUROPEAN PATENT SPECIFICATION

(11) **EP 2 099 203 B1**
(45) Date of publication and mention of the grant of the patent: **08.08.2018**
(21) Application number: 08152414.2
(22) Date of filing: 06.03.2008
(51) Int. Cl.: H04M 1/02, H04M 1/725, H04M 1/66, H04W 4/02

(54) **Safety for mobile device users while driving**
Sicherheit für Benutzer von Mobilgeräten während des Fahrens
Sécurité pour utilisateurs de dispositif mobile pendant la conduite

(43) Date of publication of application: 09.09.2009
(73) Proprietor: BlackBerry Limited, Waterloo, ON N2K 0A7 (CA)
(72) Inventor: Dietz, David Blaine, Waterloo Ontario N2K 4C8 (CA); Sangary, Nagula Tharma, Waterloo Ontario N2T 2T9 (CA); Simmons, Sean Bartholomew, Waterloo Ontario N2T 1E7 (CA)
(74) Representative: Howson, Richard Giles Bentham

(56) References cited:
- US-A1- 2007 026 850
- US-A1- 2007 072 553
- US-B1- 6 311 078

## Description

Easily transportable devices with wireless telecommunications capabilities, such as mobile telephones, personal digital assistants, handheld computers, and similar devices, will be referred to herein as mobile devices. A communications connection between a mobile device and another component might promote a voice call, a text-based message, a file transfer, or some other type of data exchange, any of which can be referred to as a call, a session, or a message.

US2007/072553 A1 discloses a portable electronic device that includes a safety feature configured to prevent at least some forms of use of the device when the user is traveling beyond a speed threshold. The device may detect its linear speed, compare that speed to a threshold, and provide a response or blocking function upon detecting that the speed has exceeded a threshold. In one embodiment, the device is a cell phone configured to disable the transmission and reception of voice and text, conceal its display screen, and disable incorporated games, cameras, internet access, etc., if the cell phone is moving faster than walking speed. The blocking function in a cell phone may be partially overridden by the introduction of hands-free equipment.

US2007/026850 A1 discloses a portable communication device that detects a current speed of travel of the portable communication device independent of any vehicle temporarily transporting the portable communication device. A speed based setting controller of the portable communication device compares the current speed to at least one threshold value set at the portable communication device. Responsive to the current speed exceeding the threshold value, the speed based setting controller automatically assigns a separate speed based setting to a current setting for each feature assigned to the threshold value, wherein each current setting for each feature designates the operability of that feature within the portable communication device, such that the current setting for each feature adjusts with a speed of travel as detected by the portable communication device.

### GENERAL

The invention is as defined by the independent claims. Particular embodiments of the invention are present in the dependent claims.

### BRIEF DESCRIPTION OF THE DRAWINGS

For a more complete understanding of this disclosure, reference is now made to the following brief description, taken in connection with the accompanying drawings and detailed description, wherein like reference numerals represent like parts.
Figure 1 is a block diagram of a telecommunications system according to an embodiment of the disclosure.
Figure 2 is a diagram of a method for promoting safe use of a mobile device according to an embodiment of the disclosure.
Figure 3 is a diagram of a wireless communications system including a mobile device operable for some of the various embodiments of the disclosure.
Figure 4 is a block diagram of a mobile device operable for some of the various embodiments of the disclosure.
Figure 5 is a diagram of a software environment that may be implemented on a mobile device operable for some of the various embodiments of the disclosure.
Figure 6 illustrates an exemplary general-purpose computer system suitable for implementing the several embodiments of the present disclosure.

### DESCRIPTION OF PREFERRED EMBODIMENTS

It should be understood at the outset that although illustrative implementations of one or more embodiments of the present disclosure are provided below, the disclosed systems and/or methods may be implemented using any number of techniques, whether currently known or in existence. The disclosure should in no way be limited to the illustrative implementations, drawings, and techniques illustrated below, including the exemplary designs and implementations illustrated and described herein, but may be modified within the scope of the appended claims along with their full scope of equivalents.

Concerns have arisen over the use of mobile devices in moving vehicles. In particular, it has been speculated that drivers using mobile devices might become distracted from vehicle operation and might therefore be more prone to accidents than other drivers. One way of addressing these concerns is by disabling the devices or certain functions of the devices when the devices are in motion. For example, the speed at which a mobile device is moving might be determined by techniques such as using global positioning system (GPS) readings, triangulation, or the number of handoffs of a call between base stations. When the speed of a mobile device is determined to be above a threshold, an assumption can be made that the device is in a moving vehicle. The mobile device's transmitting and/or receiving capabilities might then be disabled, the device's user interface might be disabled, or other restrictions might be placed on one or more of the device's functions.

However, there are situations in which such restrictions may not be appropriate. For example, if it is determined that the mobile device of a passenger in an automobile being driven by another person is in motion, the passenger's mobile device might be disabled. Since the passenger is not involved in the operation of the vehicle, the passenger's use of the mobile device may not pose a safety risk, and there may be no need to disable the passenger's mobile device or functions on the device. Similarly, it may be inappropriate to disable the mobile devices of passengers on public transportation vehicles such as buses, trains, and airplanes.

In an embodiment, when a determination is made that a mobile device is in motion above a threshold speed, a user interface on the device can notify the user of the device that a safety feature disabling the device or one or more functions of the device is about to be activated. The user can then be given an opportunity to prevent the safety feature from being activated and allow the mobile device to continue normal operation. The interface that notifies the user of the impending disablement of the mobile device might be a text-based message that appears on the display screen of the device, an automated voice message spoken by the device, an audible, visible, and/or tactile alarm signal, or some other type of output.

Upon receiving this notification, the user can provide an input into the mobile device to prevent the activation of the safety feature. For example, a driver who is willing to accept the safety risk of sending and receiving messages while driving may provide an input to override the safety feature. Alternatively, a driver who is not willing to accept such a risk might choose not to override the safety feature. Alternatively, a passenger in an automobile being driven by another person or in a public transportation vehicle may not be an appropriate target for the safety feature and may choose to prevent the activation of the safety feature. A mobile device would continue its normal operation in such cases, and none of its functions would be disabled. The input might be a press of a button on the mobile device's keypad, a touch of an area on a touch-sensitive screen on the device, a voice command spoken into the device, or some other type of input.

In an embodiment, after the mobile device provides the notification of the impending activation of the safety feature, the user may have a limited amount of time in which to prevent the activation. If the user provides an input to override the safety feature within this time period, the safety feature is not activated and the device acts in its usual manner. If the user does not override the safety feature within the time period, the safety feature is activated and restrictions are placed on the capabilities of the mobile device. The device may give the user the capability to specify the length of the time period in which activation of the safety feature can be prevented. The device may also give the user the capability to specify a key or keystroke sequence that can be used to prevent activation of the safety feature.

In an alternative embodiment, the mobile device might simply provide a notification that the device is moving at a speed greater than the threshold. The user may then take an action to activate the safety feature or may take no action and leave the safety feature inactivated.

In an embodiment, the restrictions remain in effect as long as the mobile device is determined to be in motion above the threshold speed. If the mobile device's speed drops below the threshold, the restrictions might be lifted and the device might return to normal operation. In some circumstances, the mobile device's speed may fluctuate above and below the threshold numerous times in a short period of time. For example, the speed of a mobile device of a user who is driving or riding in heavy traffic on a city street might drop below the threshold each time the user stops at a traffic light and might exceed the threshold each time the user accelerates away from a traffic light. The user might become distracted or annoyed by receiving and responding to a notification of an impending activation of the safety feature each time the mobile device's speed exceeds the threshold.

In an embodiment, the mobile device can provide the user with the capability to set a time period during which the mobile device should not provide the notifications to the user and during which the safety feature is to remain active or is to remain inactive. If the user specifies that the safety feature is to remain active, the user is not given an opportunity to override the safety feature during this time, and one or more functions of the mobile device will be disabled each time the device's speed exceeds a threshold. If the user specifies that the safety feature is to remain inactive, no functions of the mobile device will be disabled during this time, even when the device's speed exceeds a threshold. In some cases, the user might first specify a period of time during which notifications are not to be provided, and then might specify whether the safety feature is to remain active or inactive during this time. In other cases, the user might specify a period of time during which the safety feature is to remain inactive. No notifications about the safety feature would be made in such cases.

As an example, a user might be aware that his or her morning commute typically lasts about 30 minutes and typically involves stopping at several traffic lights. The user might wish to avoid receiving multiple notifications about impending function disablements during this time. Before beginning the commute, the user might provide an input into the mobile device specifying that the safety feature is to remain deactivated for the next 30 minutes. No functions of the mobile device would be disabled and no notifications about the safety feature would be made for the next half hour. Alternatively, the user might specify that no notifications about the impending activation of the safety feature are to be made for the next 30 minutes but that the safety feature is to remain in effect. That is, for that next 30 minutes, one or more functions of the mobile device would be disabled each time the mobile device's speed exceeded a threshold, and the user would not be given an opportunity to override these disablements. Either option would prevent the user from receiving multiple notifications due to multiple stops and starts during the commute.

As another example, a mobile device user might be aware that he or she will be alternating between periods of driving or riding and periods of stopping throughout an upcoming work day. Such a user might specify that the safety feature should remain deactivated for an upcoming eight-hour period. The user would then receive no safety feature-related notifications during the work day. Alternatively, the user might specify that no notifications are to be made during an upcoming eight-hour period. The user might then specify whether the safety feature is to be active or inactive during that period.

As another example, a mobile device user might take a trip to a city where he or she will not be driving at all throughout the entire trip. There would be no need for the safety feature to be activated for such a user, so the user might specify that the safety feature should be deactivated for the length of the trip. The user would then receive no safety feature-related notifications during the trip.

The restrictions placed on the mobile device when the safety feature is activated can take numerous different forms. In various embodiments, the radio functions of the mobile device remain in effect so that the device can still receive messages, but restrictions are placed on various other capabilities of the device. In some embodiments, restrictions might be placed on a capability of the device to provide information on an output interface of the device. For example, the device might receive text messages, but the display of incoming text messages on the device might be disabled. In some cases, an audible, visible, tactile, or other indication that a text message has been received might be provided even though the text message itself cannot be seen. In another example, the device might receive voice messages, but a ring tone or other indicator of an incoming voice call might be disabled. In some cases, an audible, visible, tactile, or other indication to which the device user cannot respond might be provided to indicate that a voice call has been received.

In alternative or additional embodiments, restrictions might be placed on a capability of the device to respond to certain inputs on an input interface of the device. For example, the capability of the device to respond to one or more inputs into the device's keypad might be disabled. This could prevent a user from retrieving or generating text or voice messages while the safety feature is activated. In some cases, the input restrictions on the device prevent the user from entering text or otherwise responding to incoming text messages even though the incoming text messages are displayed. In another example, the capability of the device to respond to inputs into the device's microphone might be disabled. This could prevent a user from providing voice commands while the safety feature is activated.

In some embodiments, a mobile device that has the safety feature activated might be able to provide an automated response to an incoming call. For example, if a mobile device receives a voice call, an automated voice message can inform the caller that the mobile device user is driving and unable to take the call. The caller might then be transferred to a voice mail system. Alternatively or in addition, if the mobile device receives a text-based message while the safety feature is activated, a text-based message might be automatically sent to the message sender stating that the mobile device user is driving and unable to respond to the sender's text message. The sender's text message might be made available to the mobile device user at a later time when the safety feature is not activated.

In some embodiments, the safety feature might be temporarily overridden for certain calls. In some cases, a mobile device might give a user the capability to enter the names of individuals from whom calls are always to be accepted, regardless of the activation or deactivation status of the safety feature. For example, the user might specify that calls from certain members of the user's family or certain of the user's coworkers should be allowed even when the mobile device's safety feature is activated. In other cases, calls that are designated by the caller as being urgent might be passed through to a mobile device even when the device's safety feature is activated.

In some embodiments, data related to the safety feature is captured and retained in a log file or in a similar data retention location. For example, the time when a notification is made regarding an impending activation of the safety feature, the user's response to the notification, instances when the safety feature is activated automatically, instances when the safety feature is activated through an action by the user, and similar information might be recorded. This information might be stored on the mobile device or might be transmitted to another network component for storage elsewhere.

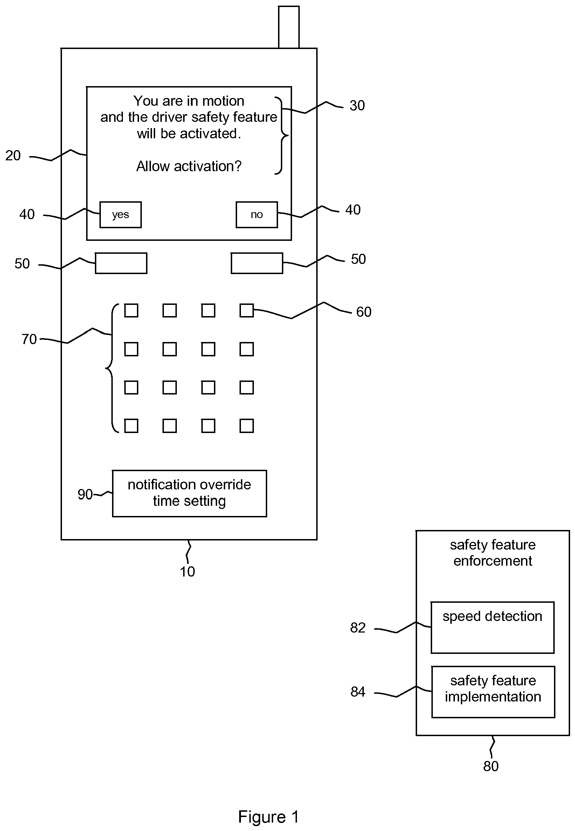

Figure 1 illustrates an embodiment of a mobile device 10 that might provide the functionality described herein. The mobile device 10 includes a display screen 20 on which a message 30 can be displayed with a statement that the safety feature is about to be activated or a similar statement. In other embodiments, the notification of an impending activation of the safety feature could be conveyed in other manners. The mobile device 10 also includes one or more mechanisms by which a user could respond to the notification message 30. In some cases, the response mechanism might be one or more touch-sensitive areas 40 on the display screen 20 with labels corresponding to response options. A user could respond to the notification message 30 by touching one of the areas 40 appropriate for the user's response. In other cases, the response mechanism might be one or more context keys 50 on the mobile device 10 that can have different functions depending on the current context of the display screen 20. Appropriate temporary labels for the context keys 50 could appear on the display screen 20 when the notification message 30 appears and a user could respond to the notification message 30 by pressing one of the context keys 50 that has a temporary label corresponding to the user's response. In other cases, the response mechanism might be one or more keys 60 on a keypad 70 of the mobile device 10. In other embodiments, the mobile device 10 could have other mechanisms that allow a user to respond to a notification that the safety feature is about to be activated.

In an embodiment, the mobile device 10 includes or has access to a safety feature enforcement component 80 that is capable of determining the speed at which the mobile device 10 is moving. The speed could be determined in one of the ways mentioned above or in some other manner. The safety feature enforcement component 80 might also be capable of implementing the safety feature on the mobile device 10. The safety feature enforcement component 80 might be a single component or might consist of a speed detection component 82 and a safety feature implementation component 84 that may be wholly or partially separate from one another. In various embodiments, the safety feature enforcement component 80 might reside wholly within the mobile device 10, wholly within one or more network components with which the mobile device 10 can communicate, or partially within the mobile device 10 and partially within the network components.

In an embodiment, the mobile device 10 includes a notification override time setting component 90 that allows a user to set a length of time during which notifications regarding the device's safety feature should not be provided. The component 90 can include appropriate input mechanisms that enable a user to specify a time period for preventing the notifications. The component 90 can also include or have access to appropriate processing capabilities to implement the prevention of the notifications for the specified time period. The safety feature may be activated or deactivated throughout the time period when notifications are not provided. The component 90 might be capable of communicating with the safety feature enforcement component 80 in order to implement an override of the safety feature. The safety feature enforcement component 80 and the notification override time setting component 90 might be implemented as hardware, software, or a combination of hardware and software.

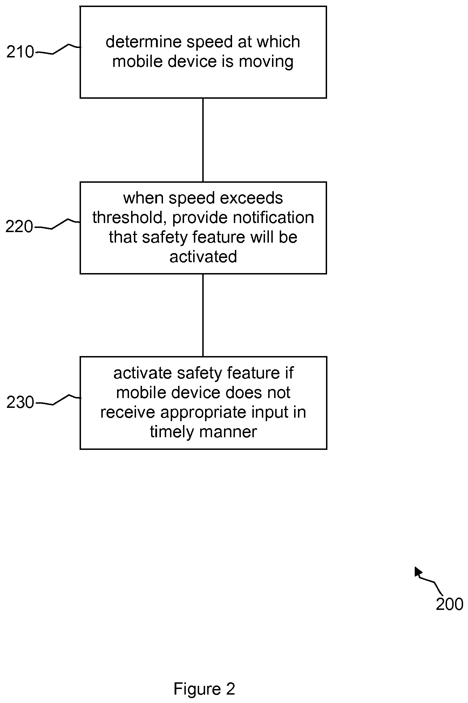

Figure 2 illustrates an embodiment of a method 200 for promoting safe use of a mobile device. At block 210, a determination is made of the speed at which the mobile device is moving. At block 220, when the speed exceeds a threshold, a notification is provided on the mobile device that a safety feature is about to be activated. In some embodiments, a check might first be made to determine whether notifications have been temporarily turned off and, if so, the notification would not be made. At block 230, if the mobile device does not receive an appropriate input in a timely manner, the safety feature may be activated.

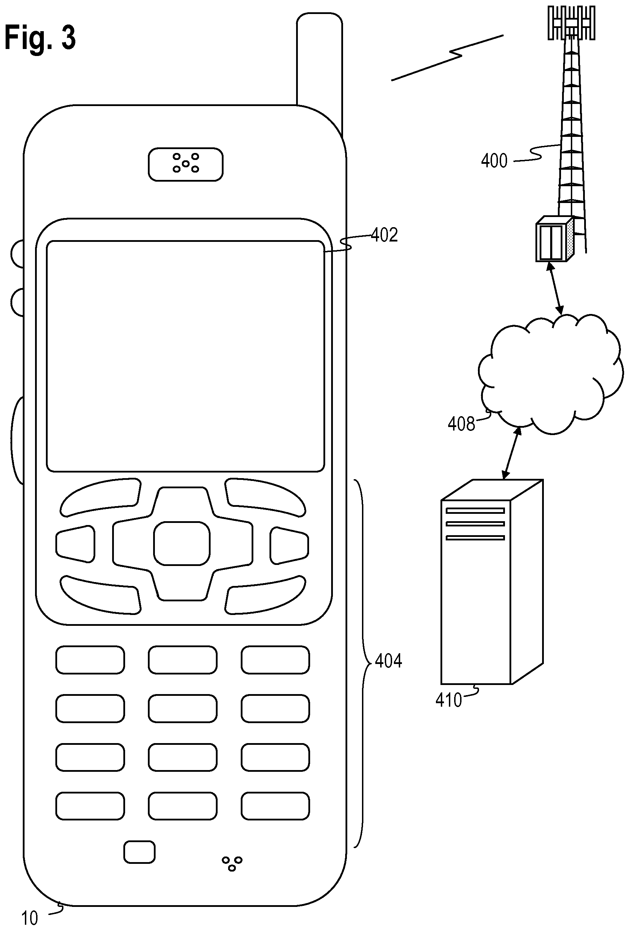

Figure 3 illustrates a wireless communications system including an embodiment of the mobile device 10. The mobile device 10 is operable for implementing aspects of the disclosure, but the disclosure should not be limited to these implementations. Though illustrated as a mobile phone, the mobile device 10 may take various forms including a wireless handset, a pager, a personal digital assistant (PDA), a personal entertainment device, a portable computer, a tablet computer, or a laptop computer. Many suitable devices combine some or all of these functions. In some embodiments of the disclosure, the mobile device 10 is not a general purpose computing device like a portable, laptop or tablet computer, but rather is a special-purpose communications device such as a mobile phone, a wireless handset, a pager, a PDA, or a telecommunications device installed in a vehicle. In another embodiment, the mobile device 10 may be a portable, laptop or other computing device. The mobile device 10 may support specialized activities such as gaming, inventory control, job control, and/or task management functions, and so on.

The mobile device 10 includes a display 402, which might be substantially similar to the display 20 of Figure 1. The mobile device 10 also includes a touch-sensitive surface, a keyboard or other input keys generally referred as 404 for input by a user. These components might be substantially similar to the keys 60 and keypad 70 of Figure 1. The keyboard may be a full or reduced alphanumeric keyboard such as QWERTY, Dvorak, AZERTY, and sequential types, or a traditional numeric keypad with alphabet letters associated with a telephone keypad. The input keys may include a trackwheel, an exit or escape key, a trackball, and other navigational or functional keys, which may be inwardly depressed to provide further input function. Alternatively, the input keys might be touch-sensitive areas within the display 402. The mobile device 10 may present options for the user to select, controls for the user to actuate, and/or cursors or other indicators for the user to direct.

The mobile device 10 may further accept data entry from the user, including numbers to dial or various parameter values for configuring the operation of the mobile device 10. The mobile device 10 may further execute one or more software or firmware applications in response to user commands. These applications may configure the mobile device 10 to perform various customized functions in response to user interaction. Additionally, the mobile device 10 may be programmed and/or configured over-the-air, for example from a wireless base station, a wireless access point, or a peer mobile device 10.

Among the various applications executable by the mobile device 10 are a web browser, which enables the display 402 to show a web page. The web page may be obtained via wireless communications with a wireless network access node, a cell tower, a peer mobile device 10, or any other wireless communication network or system 400. The network 400 is coupled to a wired network 408, such as the Internet. Via the wireless link and the wired network, the mobile device 10 has access to information on various servers, such as a server 410. The server 410 may provide content that may be shown on the display 402. Alternately, the mobile device 10 may access the network 400 through a peer mobile device 10 acting as an intermediary, in a relay type or hop type of connection.

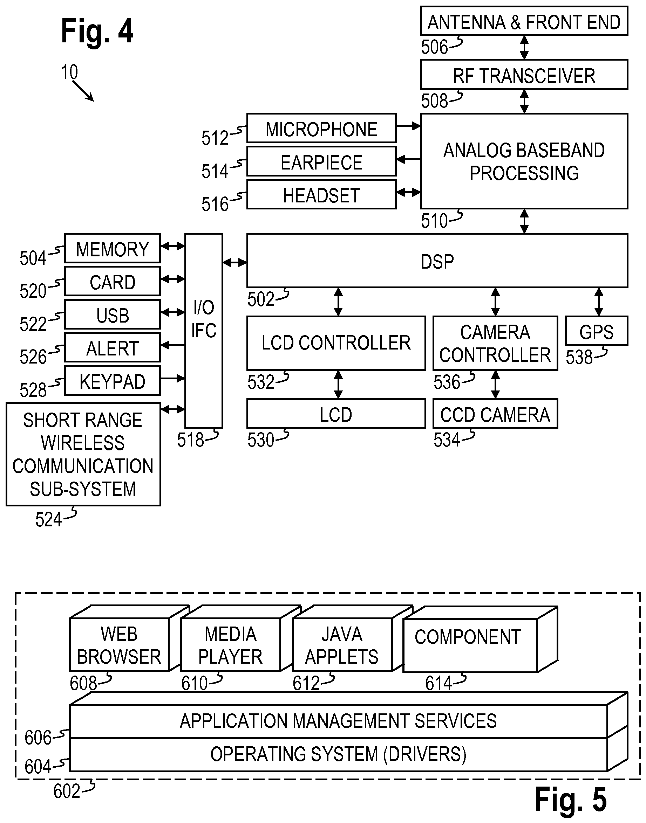

Figure 4 shows a block diagram of the mobile device 10. While a variety of known components of mobile devices 10 are depicted, in an embodiment a subset of the listed components and/or additional components not listed may be included in the mobile device 10. The mobile device 10 includes a digital signal processor (DSP) 502 and a memory 504. As shown, the mobile device 10 may further include an antenna and front end unit 506, a radio frequency (RF) transceiver 508, an analog baseband processing unit 510, a microphone 512, an earpiece speaker 514, a headset port 516, an input/output interface 518, a removable memory card 520, a universal serial bus (USB) port 522, a short range wireless communication sub-system 524, an alert 526, a keypad 528, a liquid crystal display (LCD) or other display, which may include a touch sensitive surface 530, an LCD controller 532, a charge-coupled device (CCD) camera 534, a camera controller 536, and a global positioning system (GPS) sensor 538. In an embodiment, the mobile device 10 may include another kind of display that does not provide a touch sensitive screen. In an embodiment, the DSP 502 may communicate directly with the memory 504 without passing through the input/output interface 518.

The DSP 502 or some other form of controller or central processing unit operates to control the various components of the mobile device 10 in accordance with embedded software or firmware stored in memory 504 or stored in memory contained within the DSP 502 itself. In addition to the embedded software or firmware, the DSP 502 may execute other applications stored in the memory 504 or made available via information carrier media such as portable data storage media like the removable memory card 520 or via wired or wireless network communications. The application software may comprise a compiled set of machine-readable instructions that configure the DSP 502 to provide the desired functionality, or the application software may be high-level software instructions to be processed by an interpreter or compiler to indirectly configure the DSP 502.

The antenna and front end unit 506 may be provided to convert between wireless signals and electrical signals, enabling the mobile device 10 to send and receive information from a cellular network or some other available wireless communications network or from a peer mobile device 10. In an embodiment, the antenna and front end unit 506 may include multiple antennas to support beam forming and/or multiple input multiple output (MIMO) operations. As is known to those skilled in the art, MIMO operations may provide spatial diversity which can be used to overcome difficult channel conditions and/or increase channel throughput. The antenna and front end unit 506 may include antenna tuning and/or impedance matching components, RF power amplifiers, and/or low noise amplifiers.

The RF transceiver 508 provides frequency shifting, converting received RF signals to baseband and converting baseband transmit signals to RF. In some descriptions a radio transceiver or RF transceiver may be understood to include other signal processing functionality such as modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions. For the purposes of clarity, the description here separates the description of this signal processing from the RF and/or radio stage and conceptually allocates that signal processing to the analog baseband processing unit 510 and/or the DSP 502 or other central processing unit. In some embodiments, the RF Transceiver 508, portions of the Antenna and Front End 506, and the analog baseband processing unit 510 may be combined in one or more processing units and/or application specific integrated circuits (ASICs).

The analog baseband processing unit 510 may provide various analog processing of inputs and outputs, for example analog processing of inputs from the microphone 512 and the headset 516 and outputs to the earpiece 514 and the headset 516. To that end, the analog baseband processing unit 510 may have ports for connecting to the built-in microphone 512 and the earpiece speaker 514 that enable the mobile device 10 to be used as a cell phone. The analog baseband processing unit 510 may further include a port for connecting to a headset or other hands-free microphone and speaker configuration. The analog baseband processing unit 510 may provide digital-to-analog conversion in one signal direction and analog-to-digital conversion in the opposing signal direction. In some embodiments, at least some of the functionality of the analog baseband processing unit 510 may be provided by digital processing components, for example by the DSP 502 or by other central processing units.

The DSP 502 may perform modulation/demodulation, coding/decoding, interleaving/deinterleaving, spreading/despreading, inverse fast Fourier transforming (IFFT)/fast Fourier transforming (FFT), cyclic prefix appending/removal, and other signal processing functions associated with wireless communications. In an embodiment, for example in a code division multiple access (CDMA) technology application, for a transmitter function the DSP 502 may perform modulation, coding, interleaving, and spreading, and for a receiver function the DSP 502 may perform despreading, deinterleaving, decoding, and demodulation. In another embodiment, for example in an orthogonal frequency division multiplex access (OFDMA) technology application, for the transmitter function the DSP 502 may perform modulation, coding, interleaving, inverse fast Fourier transforming, and cyclic prefix appending, and for a receiver function the DSP 502 may perform cyclic prefix removal, fast Fourier transforming, deinterleaving, decoding, and demodulation. In other wireless technology applications, yet other signal processing functions and combinations of signal processing functions may be performed by the DSP 502.

The DSP 502 may communicate with a wireless network via the analog baseband processing unit 510. In some embodiments, the communication may provide Internet connectivity, enabling a user to gain access to content on the Internet and to send and receive e-mail or text messages. The input/output interface 518 interconnects the DSP 502 and various memories and interfaces. The memory 504 and the removable memory card 520 may provide software and data to configure the operation of the DSP 502. Among the interfaces may be the USB interface 522 and the short range wireless communication sub-system 524. The USB interface 522 may be used to charge the mobile device 10 and may also enable the mobile device 10 to function as a peripheral device to exchange information with a personal computer or other computer system. The short range wireless communication sub-system 524 may include an infrared port, a Bluetooth interface, an IEEE 802.11 compliant wireless interface, or any other short range wireless communication sub-system, which may enable the mobile device 10 to communicate wirelessly with other nearby mobile devices and/or wireless base stations.

The input/output interface 518 may further connect the DSP 502 to the alert 526 that, when triggered, causes the mobile device 10 to provide a notice to the user, for example, by ringing, playing a melody, or vibrating. The alert 526 may serve as a mechanism for alerting the user to any of various events such as an incoming call, a new text message, and an appointment reminder by silently vibrating, or by playing a specific pre-assigned melody for a particular caller.

The keypad 528 couples to the DSP 502 via the interface 518 to provide one mechanism for the user to make selections, enter information, and otherwise provide input to the mobile device 10. The keyboard 528 may be a full or reduced alphanumeric keyboard such as QWERTY, Dvorak, AZERTY and sequential types, or a traditional numeric keypad with alphabet letters associated with a telephone keypad. The input keys may include a trackwheel, an exit or escape key, a trackball, and other navigational or functional keys, which may be inwardly depressed to provide further input function. Another input mechanism may be the LCD 530, which may include touch screen capability and also display text and/or graphics to the user. The LCD controller 532 couples the DSP 502 to the LCD 530.

The CCD camera 534, if equipped, enables the mobile device 10 to take digital pictures. The DSP 502 communicates with the CCD camera 534 via the camera controller 536. In another embodiment, a camera operating according to a technology other than Charge Coupled Device cameras may be employed. The GPS sensor 538 is coupled to the DSP 502 to decode global positioning system signals, thereby enabling the mobile device 10 to determine its position. Various other peripherals may also be included to provide additional functions, e.g., radio and television reception.

Figure 5 illustrates a software environment 602 that may be implemented by the DSP 502. The DSP 502 executes operating system drivers 604 that provide a platform from which the rest of the software operates. The operating system drivers 604 provide drivers for the wireless device hardware with standardized interfaces that are accessible to application software. The operating system drivers 604 include application management services ("AMS") 606 that transfer control between applications running on the mobile device 10. Also shown in Figure 5 are a web browser application 608, a media player application 610, and Java applets 612. The web browser application 608 configures the mobile device 10 to operate as a web browser, allowing a user to enter information into forms and select links to retrieve and view web pages. The media player application 610 configures the mobile device 10 to retrieve and play audio or audiovisual media. The Java applets 612 configure the mobile device 10 to provide games, utilities, and other functionality. One or more components 614 might provide functionality related to speed measurement, disablement of device features, and/or overriding of the disablement of device features.

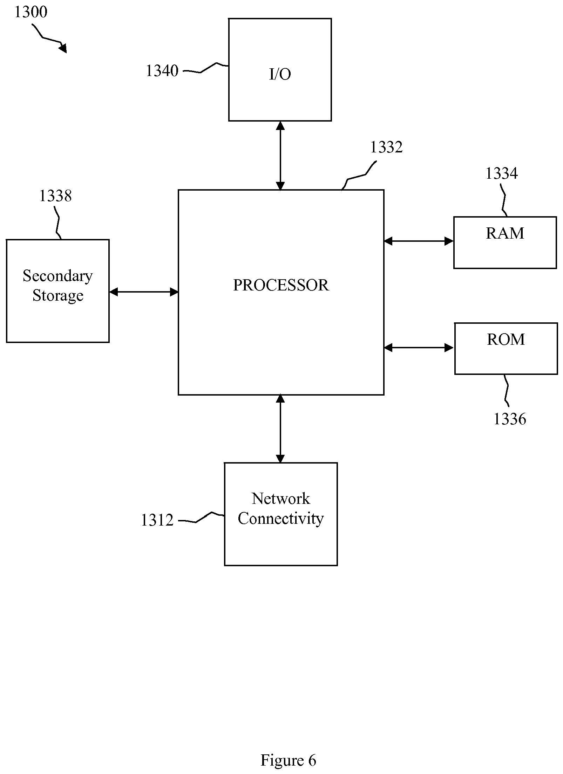

The system described above may be implemented on any general-purpose computer with sufficient processing power, memory resources, and network throughput capability to handle the necessary workload placed upon it. Figure 6 illustrates a typical, general-purpose computer system suitable for implementing one or more embodiments disclosed herein. The computer system 1300 includes a processor 1332 (which may be referred to as a central processor unit or CPU) that is in communication with memory devices including secondary storage 1338, read only memory (ROM) 1336, random access memory (RAM) 1334, input/output (I/O) devices 1340, and network connectivity devices 1312. The processor 1332 may be implemented as one or more CPU chips.

The secondary storage 1338 is typically comprised of one or more disk drives or tape drives and is used for non-volatile storage of data and as an overflow data storage device if RAM 1334 is not large enough to hold all working data. Secondary storage 1338 may be used to store programs which are loaded into RAM 1334 when such programs are selected for execution. The ROM 1336 is used to store instructions and perhaps data which are read during program execution. ROM 1336 is a non-volatile memory device which typically has a small memory capacity relative to the larger memory capacity of secondary storage. The RAM 1334 is used to store volatile data and perhaps to store instructions. Access to both ROM 1336 and RAM 1334 is typically faster than to secondary storage 1338.

I/O devices 1340 may include printers, video monitors, liquid crystal displays (LCDs), touch screen displays, keyboards, keypads, switches, dials, mice, track balls, voice recognizers, card readers, paper tape readers, or other well-known input devices.

The network connectivity devices 1312 may take the form of modems, modem banks, ethernet cards, universal serial bus (USB) interface cards, serial interfaces, token ring cards, fiber distributed data interface (FDDI) cards, wireless local area network (WLAN) cards, radio transceiver cards such as code division multiple access (CDMA) and/or global system for mobile communications (GSM) radio transceiver cards, and other well-known network devices. These network connectivity devices 1312 may enable the processor 1332 to communicate with an Internet or one or more intranets. With such a network connection, it is contemplated that the processor 1332 might receive information from the network, or might output information to the network in the course of performing the above-described method steps. Such information, which is often represented as a sequence of instructions to be executed using the processor 1332, may be received from and outputted to the network, for example, in the form of a computer data signal embodied in a carrier wave. The network connectivity devices 1312 may also include one or more transmitter and receivers for wirelessly or otherwise transmitting and receiving signal as are well know to one of ordinary skill in the art.

Such information, which may include data or instructions to be executed using the processor 1332 for example, may be received from and outputted to the network, for example, in the form of a computer data baseband signal or signal embodied in a carrier wave. The baseband signal or signal embodied in the carrier wave generated by the network connectivity devices 1312 may propagate in or on the surface of electrical conductors, in coaxial cables, in waveguides, in optical media, for example optical fiber, or in the air or free space. The information contained in the baseband signal or signal embedded in the carrier wave may be ordered according to different sequences, as may be desirable for either processing or generating the information or transmitting or receiving the information. The baseband signal or signal embedded in the carrier wave, or other types of signals currently used or hereafter developed, referred to herein as the transmission medium, may be generated according to several methods well known to one skilled in the art.

The processor 1332 executes instructions, codes, computer programs, scripts which it accesses from hard disk, floppy disk, optical disk (these various disk based systems may all be considered secondary storage 1338), ROM 1336, RAM 1334, or the network connectivity devices 1312. While only one processor 1332 is shown, multiple processors may be present. Thus, while instructions may be discussed as executed by a processor, the instructions may be executed simultaneously, serially, or otherwise executed by one or multiple processors.

While several embodiments have been provided in the present disclosure, it should be understood that the disclosed systems and methods may be embodied in many other specific forms without departing from the scope of the present invention as defined in the claims. The present examples are to be considered as illustrative and not restrictive, and the intention is not to be limited to the details given herein. For example, the various elements or components may be combined or integrated in another system or certain features may be omitted, or not implemented.

Also, techniques, systems, subsystems and methods described and illustrated in the various embodiments as discrete or separate may be combined or integrated with other systems, modules, techniques, or methods without departing from the scope of the present disclosure. Other items shown or discussed as coupled or directly coupled or communicating with each other may be indirectly coupled or communicating through some interface, device, or intermediate component, whether electrically, mechanically, or otherwise. Other examples of changes, substitutions, and alterations are ascertainable by one skilled in the art and could be made without departing from the scope of the invention as defined in the claims.

## Claims

1. A mobile device (10) comprising:
a first component (20) configured to:
provide a notification (30) related to disabling at least one function when a speed of the mobile device exceeds a threshold;
provide an option to prevent disabling of the at least one function;
a second component (40, 50, 60) configured to:
receive an override input to prevent disabling of the at least one function, wherein a time period is specified during which disabling of the at least one function is prevented;
control whether to disable the at least one function based on the override input;
wherein disabling the at least one function is prevented when the override input is received within a specified time period of providing the notification.

2. The mobile device (10) of claim 1 wherein the notification (30) comprises at least one of: a text-based message (30); a voice-based message; an audible alarm; a visible alarm; and a tactile alarm.

3. The mobile device (10) of claim 1 or claim 2, wherein the second component (40, 50, 60) comprises at least one of: a pressable button (50, 60); a touch-sensitive area (40); and a voice command receptor (512).

4. The mobile device (10) of any one of claims 1 to 3, wherein, when the override input is not received within a first specified time period, the at least one function is disabled.

5. The mobile device (10) of any one of the preceding claims, wherein the override input prevents disablement of the at least one function and prevents providing the notification for a second specified time period.

6. The mobile device (10) of any one of the preceding claims, wherein the override input specifies a time period during which providing the notification is prevented.

7. The mobile device (10) of any one of the preceding claims wherein the function that is disabled comprises at least one of: a capability to provide information on an output interface (20) on the mobile device 10); and a capability to input into an input interface (70) on the mobile device (10).

8. The mobile device (10) of any one of the preceding claims wherein, when at least one function is disabled, the mobile device (10) is arranged to provide to a sender of an incoming message an automated message related to the disablement.

9. The mobile device (10) of any one of the preceding claims, wherein the disabling of the at least one function is prevented for at least one of a call from a pre-specified individual and a call designated as urgent.

10. The mobile device (10) of any one of the preceding claims, wherein the at least one function comprises a safety feature of the mobile device and the mobile device (10) is arranged to capture and retain data related to implementation of the safety feature.

11. A system comprising:
a speed detection component (82) configured to determine a speed at which a mobile device (10) is moving;
a safety feature implementation component (84) configured to disable at least one function of the mobile device (10) when the speed exceeds a threshold;
a first output component (20) configured to provide a notification (30) related to disabling the at least one function when the speed exceeds the threshold;
a second output component configured to provide an option to prevent disabling of the at least one function;
a first input component (40, 50, 60) configured to receive an override input to prevent disabling of the at least one function ;
an override component configured to prevent the disabling of the at least one function based on the override input when the override input is received within a specified time period of providing the notification.

12. The system of claim 11, wherein the speed detection component (82) and/or the safety feature implementation component (84) resides in one of: the mobile device (10); a network element in a wireless telecommunications network (400); and partially the mobile device (10) and partially the network element.

13. The system of claim 11 or claim 12, wherein, when the mobile device (10) does not receive the first input within a first specified time period, the system is arranged to disable the at least one function.

14. The system of any one of claims 11 to 13, wherein, when the override input is not received within the specified time period, the at least one function is disabled.

15. The system of any one of claims 11 to 14, wherein the override input specifies a time period during which disabling of the at least one function is prevented and providing the notification is prevented.

16. The system of any one of claims 11 to 15, wherein the function that is disabled is at least one of: a capability to provide information on an output interface (20) on the mobile device (10); and a capability to input into an input interface (70) on the mobile device (10).

17. The system of any one of claims 11 to 16, wherein the system is arranged to capture and retain data related to implementation of the safety feature.

18. A method comprising:
determining a speed at which the mobile device (10) is moving;
when the speed exceeds a threshold, providing, by the mobile device, a notification related to activating a safety feature;
providing an option to inactivate the safety feature;
receiving an override input to inactivate the safety feature , wherein a time period is specified during which the safety feature is inactivated;
controlling whether to activate the safety feature based on the override input.

19. The method of claim 18, further comprising activating the safety feature when the mobile device (10) does not receive a timely override input that prevents the activation.

20. The method of claim 18 or claim 19, wherein the safety feature is at least one of: a disablement of a user interface (20, 70) on the mobile device (10); a disablement of a text-based message sending capability of the mobile mobile device (10); and a disablement of a voice-based message sending capability of the mobile device (10).

21. The method of any one of claims 18 to 20, further comprising when the mobile device (10) receives a notification prevention input specifying a period of time during which the notification is not to be provided, preventing the providing of the notification for the specified period of time.

22. The method of claim 21, wherein, during the specified period of time, the safety feature is one of activated and inactivated.

23. The method of any one of claims 18 to 22, wherein data related to implementation of the safety feature is captured and retained.

24. A computer-readable medium comprising instructions executable on a processor (1312) of a computing device (1300) for causing the computing device (1300) to implement the steps of the method of any one of claims 18 to 23.

## Patentansprüche

1. Mobilgerät (10), umfassend:
eine erste Komponente (20), die ausgelegt ist zum:
Bereitstellen einer Benachrichtigung (30), mit Bezug auf Blockieren von mindestens einer Funktion, wenn eine Geschwindigkeit des Mobilgeräts eine Schwelle überschreitet;
Bereitstellen einer Option zum Verhindern des Blockierens der mindestens einen Funktion;
eine zweite Komponente (40, 50, 60), die ausgelegt ist zum:
Empfangen einer Überbrückungseingabe zum Verhindern des Blockierens der mindestens einen Funktion, wobei ein Zeitraum spezifiziert wird, während dessen das Blockieren der mindestens einen Funktion verhindert wird;
Steuern, ob die mindestens eine Funktion blockiert werden soll, auf Grundlage der Überbrückungseingabe;
wobei Blockieren der mindestens einen Funktion verhindert wird, wenn die Überbrückungseingabe innerhalb eines spezifizierten Zeitraums des Bereitstellens der Benachrichtigung empfangen wird.

2. Mobilgerät (10) nach Anspruch 1, wobei die Benachrichtigung (30) mindestens eines der Folgenden umfasst: eine textbasierte Nachricht (30); eine sprachbasierte Nachricht; einen hörbaren Alarm; einen sichtbaren Alarm und einen taktilen Alarm.

3. Mobilgerät (10) nach Anspruch 1 oder Anspruch 2, wobei die zweite Komponente (40, 50, 60) mindestens eines der Folgenden umfasst: eine drückbare Taste (50, 60); ein berührempfindliches Gebiet (40) und einen Sprachbefehlsempfänger (512).

4. Mobilgerät (10) nach einem der Ansprüche 1 bis 3, wobei, wenn die Überbrückungseingabe nicht innerhalb eines ersten spezifizierten Zeitraums empfangen, wird die mindestens eine Funktion blockiert wird.

5. Mobilgerät (10) nach einem der vorhergehenden Ansprüche, wobei die Überbrückungseingabe eine Blockade der mindestens einen Funktion verhindert und Bereitstellen der Benachrichtigung für einen zweiten spezifizierten Zeitraum verhindert.

6. Mobilgerät (10) nach einem der vorhergehenden Ansprüche, wobei die Überbrückungseingabe einen Zeitraum spezifiziert, während dessen das Bereitstellen der Benachrichtigung verhindert wird.

7. Mobilgerät (10) nach einem der vorhergehenden Ansprüche, wobei die Funktion, die blockiert wird, mindestens eine der folgenden umfasst: eine Fähigkeit zum Bereitstellen von Informationen auf einer Ausgabeschnittstelle (20) auf dem Mobilgerät (10) und eine Fähigkeit zum Eingeben in eine Eingabeschnittstelle (70) auf dem Mobilgerät (10).

8. Mobilgerät (10) nach einem der vorhergehenden Ansprüche, wobei, wenn mindestens eine Funktion blockiert ist, das Mobilgerät (10) eingerichtet ist zum Bereitstellen für einen Absender einer eingehenden Nachricht einer automatischen Nachricht mit Bezug auf die Blockade.

9. Mobilgerät (10) nach einem der vorhergehenden Ansprüche, wobei das Blockieren der mindestens einen Funktion für einen Anruf von einer vorspezifizierten Person und/oder einen als dringend gekennzeichneten Anruf verhindert wird.

10. Mobilgerät (10) nach einem der vorhergehenden Ansprüche, wobei die mindestens eine Funktion ein Sicherheitsmerkmal des Mobilgeräts umfasst und das Mobilgerät (10) eingerichtet ist zum Aufnehmen und Behalten von Daten mit Bezug auf Implementation des Sicherheitsmerkmals.

11. System, umfassend:
eine Geschwindigkeitsdetektionskomponente (82), die ausgelegt ist zum Bestimmen einer Geschwindigkeit, mit welcher sich ein Mobilgerät (10) bewegt;
eine Sicherheitsmerkmalimplementationskomponente (84), die ausgelegt ist zum Blockieren von mindestens einer Funktion des Mobilgeräts (10), wenn die Geschwindigkeit eine Schwelle überschreitet;
eine erste Ausgabekomponente (20), die ausgelegt ist zum Bereitstellen einer Benachrichtigung (30) mit Bezug auf Blockieren der mindestens einen Funktion, wenn die Geschwindigkeit die Schwelle überschreitet;
eine zweite Ausgabekomponente, die ausgelegt ist zum Bereitstellen einer Option zum Verhindern des Blockierens der mindestens einen Funktion;
eine erste Eingabekomponente (40, 50, 60), die ausgelegt ist zum Empfangen einer Überbrückungseingabe zum Verhindern des Blockierens der mindestens einen Funktion;
eine Überbrückungskomponente, die ausgelegt ist zum Verhindern des Blockierens der mindestens einen Funktion auf Grundlage der Überbrückungseingabe, wenn die Überbrückungseingabe innerhalb eines spezifizierten Zeitraums des Bereitstellens der Benachrichtigung empfangen wird.

12. System nach Anspruch 11, wobei sich die Geschwindigkeitsdetektionskomponente (82) und/oder die Sicherheitsmerkmalimplementationskomponente (84) in einem der Folgenden befindet: dem Mobilgerät (10); einem Netzelement in einem drahtlosen Telekommunikationsnetz (400) und teilweise dem Mobilgerät (10) und teilweise dem Netzelement.

13. System nach Anspruch 11 oder Anspruch 12, wobei, wenn das Mobilgerät (10) die erste Eingabe nicht innerhalb eines ersten spezifizierten Zeitraums empfängt, das System eingerichtet ist zum Blockieren der mindestens einen Funktion.

14. System nach einem der Ansprüche 11 bis 13, wobei, wenn die Überbrückungseingabe nicht innerhalb des spezifizierten Zeitraums empfangen wird, die mindestens eine Funktion blockiert wird.

15. System nach einem der Ansprüche 11 bis 14, wobei die Überbrückungseingabe einen Zeitraum spezifiziert, während dessen Blockieren der mindestens einen Funktion verhindert wird und Bereitstellen der Benachrichtigung verhindert wird.

16. System nach einem der Ansprüche 11 bis 15, wobei die Funktion, die blockiert wird, mindestens eine der folgenden ist: eine Fähigkeit zum Bereitstellen von Informationen auf einer Ausgabeschnittstelle (20) auf dem Mobilgerät (10) und eine Fähigkeit zum Eingeben in eine Eingabeschnittstelle (70) auf dem Mobilgerät (10).

17. System nach einem der Ansprüche 11 bis 16, wobei das System eingerichtet ist zum Aufnehmen und Behalten von Daten mit Bezug auf Implementation des Sicherheitsmerkmals.

18. Verfahren, umfassend:
Bestimmen einer Geschwindigkeit, mit welcher sich das Mobilgerät (10) bewegt;
Bereitstellen, durch das Mobilgerät, einer Benachrichtigung mit Bezug auf Aktivieren eines Sicherheitsmerkmals, wenn die Geschwindigkeit eine Schwelle überschreitet;
Bereitstellen einer Option zum Deaktivieren des Sicherheitsmerkmals;
Empfangen einer Überbrückungseingabe zum Deaktivieren des Sicherheitsmerkmals, wobei ein Zeitraum spezifiziert wird, während dessen das Sicherheitsmerkmal deaktiviert ist;
Steuern, ob das Sicherheitsmerkmal aktiviert werden soll, basierend auf der Überbrückungseingabe.

19. Verfahren nach Anspruch 18, ferner umfassend Aktivieren des Sicherheitsmerkmals, wenn das Mobilgerät (10) keine zeitgerechte Überbrückungseingabe, die die Aktivierung verhindert, empfängt.

20. Verfahren nach Anspruch 18 oder Anspruch 19, wobei das Sicherheitsmerkmal mindestens eine der folgenden ist: eine Blockade einer Benutzerschnittstelle (20, 70) auf dem Mobilgerät (10); eine Blockade einer textbasierten Nachrichtensendefähigkeit des Mobilgeräts (10) und eine Blockade einer sprachbasierten Nachrichtensendefähigkeit des Mobilgeräts (10).

21. Verfahren nach einem der Ansprüche 18 bis 20, ferner umfassend, wenn das Mobilgerät (10) eine Benachrichtigungsverhinderungseingabe empfängt, die einen Zeitraum spezifiziert, während dessen die Benachrichtigung nicht bereitgestellt werden soll, Verhindern des Bereitstellens der Benachrichtigung für den spezifizierten Zeitraum.

22. Verfahren nach Anspruch 21, wobei das Sicherheitsmerkmal während des spezifizierten Zeitraums aktiviert ist oder deaktiviert ist.

23. Verfahren nach einem der Ansprüche 18 bis 22, wobei auf Implementation des Sicherheitsmerkmals bezogene Daten aufgenommen und behalten werden.

24. Computerlesbares Medium, das Anweisungen umfasst, die auf einem Prozessor (1312) einer Datenverarbeitungsvorrichtung (1300) ausführbar sind, um die Datenverarbeitungsvorrichtung (1300) zu veranlassen, die Schritte des Verfahrens nach einem der Ansprüche 18 bis 23 zu implementieren.

## Revendications

1. Dispositif mobile (10) comprenant :
un premier composant (20) configuré pour :
fournir une notification (30) liée à la désactivatio d'au moins une fonction lorsqu'une vitesse du dispositif mobile dépasse un seuil ;
fournir une option pour empêcher la désactivation de l'au moins une fonction ;
un second composant (40, 50, 60) configuré pour :
recevoir une entrée d'outrepassement pour empêcher la désactivation de l'au moins une fonction, où une période de temps est spécifiée pendant laquelle la désactivation de l'au moins une fonction est empêchée ;
commander la désactivation ou non de l'au moins une fonction sur la base de l'entrée d'outrepassement ;
dans lequel la désactivation de l'au moins une fonction est empêchée lorsque l'entrée d'outrepassement est reçue dans une période de temps spécifiée de fourniture de la notification.

2. Dispositif mobile (10) selon la revendication 1, dans lequel la notification (30) comprend au moins l'un parmi : un message basé sur du texte (30) ; un message basé sur la voix ; une alarme audible ; une alarme visible ; et une alarme tactile.

3. Dispositif mobile (10) selon la revendication 1 ou la revendication 2, dans lequel le second composant (40, 50, 60) comprend au moins l'un parmi : un bouton pouvant être pressé (50, 60) ; une zone tactile (40) ; et un récepteur de commande vocale (512).

4. Dispositif mobile (10) selon l'une quelconque des revendications 1 à 3, dans lequel, lorsque l'entrée d'outrepassement n'est pas reçue dans une première période de temps spécifiée, l'au moins une fonction est désactivée.

5. Dispositif mobile (10) selon l'une quelconque des revendications précédentes, dans lequel l'entrée d'outrepassement empêche la désactivation de l'au moins une fonction et empêche la fourniture de la notification pour une seconde période de temps spécifiée.

6. Dispositif mobile (10) selon l'une quelconque des revendications précédentes, dans lequel l'entrée d'outrepassement spécifie une période de temps pendant laquelle la fourniture de la notification est empêchée.

7. Dispositif mobile (10) selon l'une quelconque des revendications précédentes, dans lequel la fonction qui est désactivée comprend au moins l'une entre : une capacité à fournir des informations sur une interface de sortie (20) sur le dispositif mobile (10) ; et une capacité à entrer dans une interface d'entrée (70) sur le dispositif mobile (10) .

8. Dispositif mobile (10) selon l'une quelconque des revendications précédentes, dans lequel, lorsqu'au moins une fonction est désactivée, le dispositif mobile (10) est conçu pour fournir à un expéditeur d'un message entrant un message automatisé lié à la désactivation.

9. Dispositif mobile (10) selon l'une quelconque des revendications précédentes, dans lequel la désactivation de l'au moins une fonction est empêchée pour au moins un d'un appel en provenance d'un individu pré-spécifié et d'un appel désigné comme urgent.

10. Dispositif mobile (10) selon l'une quelconque des revendications précédentes, dans lequel l'au moins une fonction comprend une caractéristique de sécurité du dispositif mobile et le dispositif mobile (10) est conçu pour capturer et conserver des données liées à la mise en oeuvre de la caractéristique de sécurité.

11. Système comprenant :
un composant de détection de vitesse (82) configuré pour déterminer une vitesse à laquelle un dispositif mobile (10) se déplace ;
un composant de mise en oeuvre de caractéristique de sécurité (84) configuré pour désactiver au moins une fonction du dispositif mobile (10) lorsque la vitesse dépasse un seuil ;
un premier composant de sortie (20) configuré pour fournir une notification (30) liée à la désactivation de l'au moins une fonction lorsque la vitesse dépasse le seuil ;
un second composant de sortie configuré pour fournir une option pour empêcher la désactivation de l'au moins une fonction ;
un premier composant d'entrée (40, 50, 60) configuré pour recevoir une entrée d'outrepassement pour empêcher la désactivation de l'au moins une fonction ;
un composant d'outrepassement configuré pour empêcher la désactivation de l'au moins une fonction sur la base de l'entrée d'outrepassement lorsque l'entrée d'outrepassement est reçue dans une période de temps spécifiée de fourniture de la notification.

12. Système selon la revendication 11, dans lequel le composant de détection de vitesse (82) et/ou le composant de mise en oeuvre de caractéristique de sécurité (84) réside dans l'un parmi : le dispositif mobile (10) ; un élément de réseau dans un réseau de télécommunications sans fil (400) ; et en partie dans le dispositif mobile (10) et en partie dans l'élément de réseau.

13. Système selon la revendication 11 ou la revendication 12, dans lequel, lorsque le dispositif mobile (10) ne reçoit pas la première entrée dans une première période de temps spécifiée, le système est conçu pour désactiver l'au moins une fonction.

14. Système selon l'une quelconque des revendications 11 à 13, dans lequel, lorsque l'entrée d'outrepassement n'est pas reçue dans la période de temps spécifiée, l'au moins une fonction est désactivée.

15. Système selon l'une quelconque des revendications 11 à 14, dans lequel l'entrée d'outrepassement spécifie une période de temps pendant laquelle la désactivation de l'au moins une fonction est empêchée et la fourniture de la notification est empêchée.

16. Système selon l'une quelconque des revendications 11 à 15, dans lequel la fonction qui est désactivée est au moins l'une entre : une capacité à fournir des informations sur une interface de sortie (20) sur le dispositif mobile (10) ; et une capacité à entrer dans une interface d'entrée (70) sur le dispositif mobile (10).

17. Système selon l'une quelconque des revendications 11 à 16, le système étant conçu pour capturer et conserver des données liées à la mise en oeuvre de la caractéristique de sécurité.

18. Procédé comprenant :
la détermination d'une vitesse à laquelle le dispositif mobile (10) se déplace ;
lorsque la vitesse dépasse un seuil, la fourniture, par le dispositif mobile, d'une notification liée à l'activation d'une caractéristique de sécurité ;
la fourniture d'une option pour désactiver la caractéristique de sécurité ;
la réception d'une entrée d'outrepassement pour désactiver la caractéristique de sécurité, où une période de temps est spécifiée pendant laquelle la caractéristique de sécurité est désactivée ;
la commande de l'activation ou non de la caractéristique de sécurité sur la base de l'entrée d'outrepassement.

19. Procédé selon la revendication 18, comprenant en outre l'activation de la caractéristique de sécurité lorsque le dispositif mobile (10) ne reçoit pas une entrée d'outrepassement à temps qui empêche l'activation.

20. Procédé selon la revendication 18 ou la revendication 19, dans lequel la caractéristique de sécurité est au moins l'une parmi : une désactivation d'une interface utilisateur (20, 70) sur le dispositif mobile (10) ; une désactivation d'une capacité d'envoi de message basé sur du texte du dispositif mobile (10) ; et une désactivation d'une capacité d'envoi de message basé sur la voix du dispositif mobile (10).

21. Procédé selon l'une quelconque des revendications 18 à 20, comprenant en outre, lorsque le dispositif mobile (10) reçoit une entrée d'empêchement de notification spécifiant une période de temps pendant laquelle la notification ne doit pas être fournie, l'empêchement de la fourniture de la notification pour la période de temps spécifiée.

22. Procédé selon la revendication 21, dans lequel, pendant la période de temps spécifiée, la caractéristique de sécurité est l'une entre activée et désactivée.

23. Procédé selon l'une quelconque des revendications 18 à 22, dans lequel des données liées à la mise en oeuvre de la caractéristique de sécurité sont capturées et conservées.

24. Support lisible par ordinateur comprenant des instructions exécutables sur un processeur (1312) d'un dispositif informatique (1300) pour amener le dispositif informatique (1300) à mettre en oeuvre les étapes du procédé selon l'une quelconque des revendications 18 à 23.
